# EUROPÄISCHE PATENTSCHRIFT

(11) **EP 0 928 951 B1**
(45) Veröffentlichungstag und Bekanntmachung des Hinweises auf die Patenterteilung: **14.07.2004**
(21) Anmeldenummer: 99100517.4
(22) Anmeldetag: 13.01.1999
(51) Int. Cl.: G01B 21/24

(54) **Lagemesssonde zum gegenseitigem Ausrichten von Körpern**
Position measuring sensor for mutually aligning objects
Capteur de mesure de position pour l'alignement mutuel des objets

(30) Priorität: 13.01.1998 DE 19800901
(43) Veröffentlichungstag der Anmeldung: 14.07.1999
(73) Patentinhaber: Prüftechnik Dieter Busch AG, 85737 Ismaning (DE)
(72) Erfinder:

(56) Entgegenhaltungen:
- EP-A- 0 557 591
- WO-A-97/21980
- DE-A- 19 546 405
- US-A- 5 038 485
- PATENT ABSTRACTS OF JAPAN vol. 009, no. 334 (P-417), 27. Dezember 1985 (1985-12-27) & JP 60 158310 A (MITSUBISHI PRECISION KK), 19. August 1985 (1985-08-19)

## Beschreibung

Die Erfindung bezieht sich auf eine Lagemeßsonde zum gegenseitigem Ausrichten von Körpern, insbesondere zum Zwecke des Parallelrichtens von Wellen, Walzen und dergleichen.
Bisher wurden zur Winkelvermessung zum Zwecke der gegenseitigem Ausrichtung von Körpern, z.B. von Achsen, Walzen, Rollen, Spindeln, Drehöfen und dgl., deren Antrieben wie Ketten, Riemen, Getriebe, Kardanwellen und dgl. sowie deren zugehörigen Tragelementen wie Stuhlung, Maschinenbetten, Fundamenten u. s. w. mit Meßgenauigkeiten unter 1 mm/m optische Meßeinrichtungen wie Theodoliten, Autokollimatoren, Interferometer und Laser und als weitere Hilfsmittel Markierungen, Targets, Penta-, Dachkant-, Tripel-Prismen, Spiegel, Detektoren, Stative und dgl. in sehr zeitaufwendiger Weise eingesetzt.
Es ist in der Zwischenzeit auch vorgeschlagen worden, anstelle der vorgenannten Hilfsmittel einen optischen Kreisel, speziell einen Faserkreisel zu verwenden (siehe beispielsweise WO-A-97 21 980). Wiewohl mit diesem Hilfsmittel eine enorme Zeitersparnis, und damit auch eine Kostenersparnis möglich ist, stehen diesem Vorteil zur Zeit noch nicht unbedeutende Herstellkosten entgegen. Es ist daher wünschenswert, ein Verfahren und eine zugehörige Einrichtung bereitzustellen, welche sowohl einfach anzuwenden ist, als auch für den angestrebten Zweck hinreichend preisgünstig hergestellt werden kann.
Der Erfindung liegt somit die Aufgabe zugrunde, ein Gerät anzugeben, das die Winkelvermessung von gegenseitig auszurichtenden Körpern mit einem gegenüber den in diesem Zusammenhang bekannten Einrichtungen und Hilfsmitteln wesentlich kostengünstigeren Aufwand gestattet.
Die vorgenannte Aufgabe wird durch die Merkmale des Patentanspruchs 1 gelöst.

Im Gegensatz zu den meisten bekannten Verfahren, bei denen in der Regel mehrere Einrichtungen und Hilfsmittel an den zu vermessenden Körpern befestigt, aufeinander ausgerichtet und dann gemeinsam mit den Körpern in einem Meßzyklus bewegt werden müssen, braucht gemäss der Erfindung nur eine einzige, einfach zü handhabende, mit mindestens einem mechanischen Schwinger oder Oszillator als Beschleunigungssensor ausgerüstete Lagemeßsonde (speziell in Form eines Stimmgabel-Gyroskopes oder eines sogenannten Piezokreisels) in wenigen Meßpositionen an jeweils zwei in Bezug aufeinander auszurichtenden Körpern angesetzt und hinsichtlich einer oder mehrerer raumfester Winkelkoordinaten, z.B. Azimut (oder Deklination) und Elevation (oder Inklination) direkt oder elektronisch abgelesen zu werden, um feststellen zu können, ob überhaupt und ggf. welche Lagekorrekturen zur Erzielung der gewünschten Ausrichtung nötig sind. Insbesondere kann mit dem vorgesehenen Verfahren unter Benutzung der erfindungsgemässen Lagemeßsonde die parallele Ausrichtung zweier oder weiterer Achsen, Wellen, Rädern, Riemenscheiben, Kettenantrieben und ähnlichen Einrichtungen sowohl schnell als auch kostengünstig überprüft werden. Die hierfür erforderliche Mannmeßzeit ist bei weitem kürzer als die unter Verwendung der normalerweise benutzten Einrichtungen und Hilfsmittel erf orderliche. Es ist eine Reduzierung der Mannmeßzeit um bis zum 95 % für eine Vielzahl der derzeit noch nach herkömmlicher Weise ausgeführten Ausrichtarbeiten zu erwarten.

Die Erfindung nutzt die Erkenntnis, daß es bislang nicht möglich war, für eine aufgabengemässe Messung von Richtungsunterschieden die an sich bekannten Kreisel auf Basis mechnischer Oszillatoren, insbesondere die sog. Piezo-Kreisel vorzusehen. Das mit solchen Kreiseln hinsichtlicht Auflösung und Stabilität erzielbare Messergebnis wäre im wesentlichen vergleichbar gewesen mit einer subjektiven Einschätzung (sog. Augenmass) einer messenden Person. Das zu lösende Problem konnte bislang also nur dadurch gemeistert werden, dass ein optischer Kreisel für die Messung von Differenzwinkeln zugrundegelegt wurde. Diese Erwartungshaltung eines Fachmanns ist jedoch - zumindest für weniger stringente Messaufgaben - gegenstandslos geworden, da es gelingt, mit hochwertigen und industriell verfügbaren sog. Piezokreiseln oder technisch vergleichbaren Beschleunigungsaufnehmem auf Oszillatorbasis eine Meßsonde oder ein Gerät zu schaffen, welches für die genaue Messung von Differenzwinkeln geeignet ist und welches sich dabei durch leichteste Handhabung auszeichnet. Wenn die Zeitspanne für das Ansetzen der Meßsonde an den beiden auszurichtenden Körpern zwecks Gewinnung eines Meßwerte-Paares nur einige Sekunden dauert (was wegen der angestrebten Zeitersparnis prinzipiell gewünscht wird), und wenn die Meßsonde während des Messvorganges maximal nur einige hundert Winkelgrad verdreht wird, können für die Praxis ausreichend genaue Meßwerte gewonnen werden.

Die Meßgenauigkeit ist um so größer, je zügiger und/oder öfter die Meßsonde mit ihrem Piezo- Kreisel umgesetzt werden kann.

Der Erfindung liegt damit vorrangig die Aufgabe zugrunde, eine Lagemeßsonde zu schaffen, mit der die räumliche Lage zweier Körper in Bezug aufeinander ermittelt werden kann, wobei die Meßsonde bzw. Lagemesssonde eine hohe Meßgenauigkeit für Winkelmessungen aufweist und eine besonders einfache Durchführung einer entsprechenden Meßaufgabe gestattet.
Die Aufgabe wird durch die im Patentanspruch 1 angegebenen Merkmale gelöst.
Die abhängigen Ansprüche 2 bis 12 haben bevorzugte Ausgestaltungen der Lagemeßsonde nach Patentanspruchs 1 zum Gegenstand.
Die Erfindung wird nachstehend anhand der Zeichnung an einem Ausführungsbeispiel noch näher erläutert.

In der Zeichnung zeigt jeweils schematisch
Fig. 1 drei in Bezug aufeinander auszurichtende Körper sowie eine an diesen der Reihe nach anzusetzende Lagemeßsonde in perspektivischer Darstellung, und
Fig. 2 eine Ausführung einer zum Vermessen der relativen Winkelposition der Körper in Fig.1 geeigneten Lagemeßsonde ebenfalls in perspektivischer Darstellung

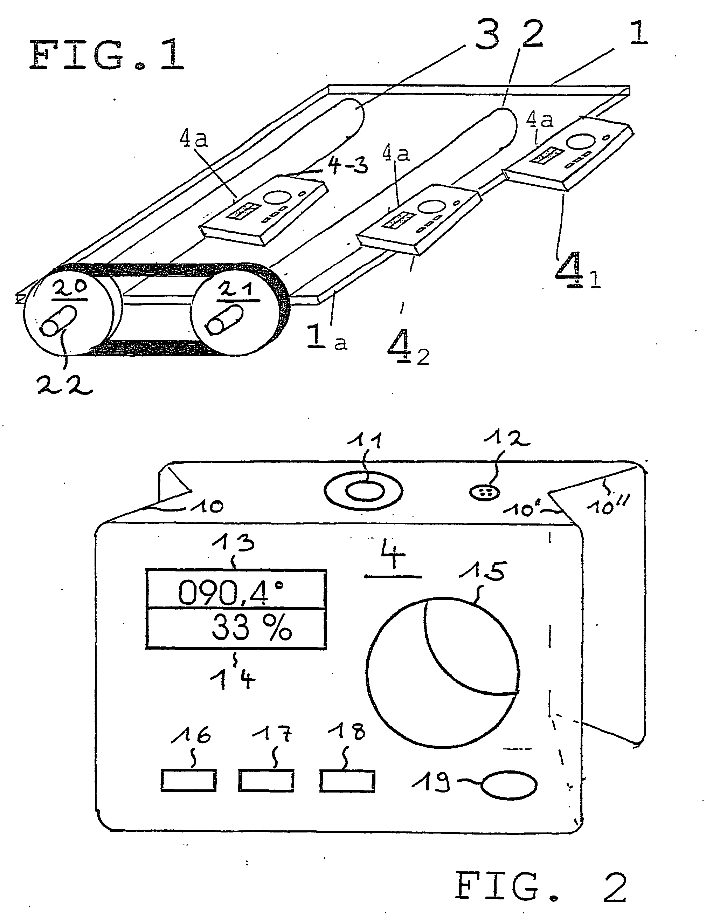

Die Fig. 1 zeigt in perspektivischer Darstellung einen ersten, als Träger dienenden Körper 1, der der Einfachheit halber als Platte dargestellt ist, sowie zwei weitere gegenüber dem ersten Körper 1 und in Bezug aufeinander auszurichtende Körper 2 und 3 von zylindrischem Außenumriß. Bei entsprechender Gestaltung im Detail könnte es sich bei dem Körper 1 um ein Maschinenbett und bei den Körpern 2 und 3 um Walzen handeln, die an dem Maschinenbett um ihre Längsachse drehbar gelagert und hinsichtlich ihrer Drehachsen parallel zueinander sowie in einer definierten Winkelstellung bezüglich einer Referenzfläche an dem Maschinenbett auszurichten sind. Als Beispiel sind Körper 2 und 3 zusätzlich mit einer Riemenscheibe, zum Beispiel einer solchen für Keilriemen oder Zahnriemen, versehen.

Im Ausführungsbeispiel dient als Referenzfläche am Körper 1 die ebene seitliche Stirnfläche la, und die Längsachsen der walzenfärmigen Körper 2 und 3 seien parallel zueinander und zu der Referenzfläche la auszurichten.

Die für das Ausrichten in die vorgenannte gewünschte gegenseitige Winkelposition evtl. nötigen Lagekorrekturwerte werden, wie in Fig. 1 dargestellt, dadurch gewonnen, daß eine Lagemeßsonde 4 mit ihrer Kontaktfläche 4a nacheinander (4-1, 4-2, 4-3) an die Referenzfläche 1a am Körper 1, parallel zur Längsmittelachse an den zylindrischen Umfang des Körpers 2 und parallel zur Längsmittelachse an den zylindrischen Umfang des Körpers 3 angesetzt wird. Durch Betätigung eines an der Lagemeßsonde angebrachten elektrischen Tasters oder Schalters ermittelt eine in der Sonde befindliche mechanisch-elektronische Einrichtung, bestehend aus einem Kreiselsystem mit Oszillatoren, speziell piezoelektrisch betätigten Oszillatoren, und mit z.B. einem Mikroprozessor oder -controller die aktuelle räumliche Ausrichtung der Sonde zumindest hinsichtlich Azimut (also Drehwinkel um eine Hochachse, englischsprachig auch als "yaw" bezeichnet). Die Ausrichtung der Sonde hinsichtlich des Messwinkels "Elevation" kann in einer extrem vereinfachten Ausführung der Erfindung mittels einer Libelle nach dem Prinzip der Wasserwaage erfolgen. In der regulären, qualitativ höherwertigen Ausführung der Erfindung muss jedoch die Orientierung der Meßsonde gegenüber den weiteren beiden räumlichen Dreh- oder Neigungsachsen vermessen werden. Bei diesen Achsen handelt es sich daher um jene, welche englischsprachig auch als "pitch" (Bezeichnung für die Elevation) und "roll" (Drall- oder Drillwinkel) bezeichnet werden. Nach jedem Ansetzen an einen der Körper 1, 2 und 3 kann der von dem Piezo-Kreisel-System gemessene und von der Elektronik in Messwerte umgesetzte Differenzwinkel bezüglich zumindest einer der genannten Referenzrichtungen durch den Bediener abgelesen werden. Es sei festgehalten, dass das genannte Piezo-Kreisel-System normalerweise eine Mehrzahl einzelner piezo-betätigter Oszillatoren enthält. Bevorzugt kann der Bediener jedoch zunächst eine Mess- oder Speichertaste betätigen, wodurch die Elektronik der Meßsonde entsprechende elektrische Signale von der Lagemeßsonde für die weitere Verwendung registriert und speichert. Die gespeicherten Messwerte können einzeln oder als Datensatz an eine nicht dargestellte Datenverarbeitungs-Einrichtung ausgegeben werden. Bei der Betätigung der genannten Mess- oder Speichertaste kann die Meßsonde ein akustisches Signal abgeben, wenn eine registrierte Winkeldifferenz ein voreinstellbares Limit überschritten haben sollte.

Piezo-Kreisel zeichnen sich durch einen nur kleinen Driftwinkel pro Zeiteinheit aus. In der Praxis ist jedoch darauf zu achten, dass die Lagemeßsonde in einer Zeitspanne in der Größenordnung von z.B. 10 bis 20 Sekunden zwischen den Körpern 1, 2 und 3 umzusetzen und abzulesen ist. Dabei kann z.B. auch so vorgegangen werden, daß als erstes eine Referenzpositionsmessung an der Körperfläche 1a des Körpers 1, dann als nächstes eine Lagepositionsmessung am Umfang des Körpers 2, dann wieder eine Referenzpositionsmessung an der Körperfläche 1a und dann erneut eine Lagepositionsmessung am Umfang des Körpers 3 durchgeführt wird, wobei für jede Umsetzung die vorbestimmte Zeitspanne zur Verfügung steht.

Zur Ermittlung der gegenseitigem Ausrichtung der Körper 1, 2 und 3 im Raume kann es nötig sein, weitere Referenz- und Lagepositionsmessungen an den Körpern 1, 2 und 3 in einer räumlichen Winkelposition der Lagemeßsonde 4 parallel zu einer Referenzebene durchzufahren, die mit der Referenzebene, die für die ersten Messungen herangezogen wurde, einen definierten Winkel, z.B. 90°, einschließt. Die erfindungsgemässe Meßsonde ist speziell geeignet, auch solche Referenzebenen zu vermessen, welche durch Front-Flächen von z.B. Riemenscheiben oder Kettenrädern, oder durch Stirnflächen von Wellen, Achsen oder Walzen definiert werden.

Die Fig. 2 zeigt schematisch in perspektivischer Darstellung eine Lagemeßsonde 4, wie sie für die Durchführung des erfindungsgemäßen Meßverfahrens geeignet ist und unter anderem als Lagemeßsonde bei der Winkelvermessung der Körper 1, 2 und 3 in Fig. 1 eingesetzt werden könnte. Diese Meßsonde 4 ist mit einem oder mehreren Stimmgabel-Gyroskopen oder Piezo-Kreiseln (nicht gezeigt) sowie zugehöriger Mikroelektronik ausgestattet, der bzw. die fest in dem Sondengehäuse angeordnet ist oder sind. Das Sondengehäuse weist in einer bevorzugten Ausführungsform zwei im wesentlichen parallele Oberflächen auf, von denen eine ausgesprochen plan ausgeführt ist, während auf der anderen Bedienelemente und Ablese-Einrichtungen angebracht sein können. Die an die parallelen oder auch planparallelen Oberflächen angrenzenden Seitenflächen stehen bevorzugt rechtwinklig zu jenen. Von den Seitenflächen ist zumindest eine und bevorzugt drei mit prismatisch eingeschnittenen Ausnehmungen versehen, zum Beispiel Ausnehmungen mit V-förmigem Querschnitt. Die Ausnehmungen stellen Kontaktflächen zum Aufsetzen der Meßsonde auf auszumessende Oberflächen dar. Solche Kontaktflächen sind in Fig. 2 durch die Bezugsziffern 10, 10' gekennzeichnet. Die Ausnehmungen definieren aufgrund ihrer geometrischen Eigenschaften eine Referenzachse, welche mit Vorteil senkrecht zu den Flächennormalen der planparallelen Oberflächen verläuft. Sind mehrere solcher Referenzachsen vorhanden, wie z.B. aus Fig. 2 ersichtlich, so sind diese bevorzugt parallel und/oder rechtwinklig zueinander orientiert.

Des weiteren weist die Lagemeßsonde 4 eine Computerschnittstelle 12 für Eichzwecke und Meßdatenverarbeitung auf, eine Anzeige 13 für einen aktuellen Winkel oder einen Differenzwinkel hinsichtlich Azimut und/oder Elevation, ggf. auch für die Ablesung eines entsprechenden Wertes für eine "Roll"-Koordinate. Weiterhin vorhanden ist eine Anzeige 14, welche die Ausschöpfung einer voreinstellbaren Toleranzangabe angibt. Diese Anzeige ist deswegen nützlich, weil sowohl bei scheinbarem Stillstand als auch bei Bewegung der Meßsonde 10 aufgrund der registrierten Beschleunigungen ein Zuwachs des Messfehlers zu erwarten ist und welcher zum Beispiel bereits durch die Erdrotation verursacht werden kann. Wird zum Beispiel für die Messsonde über den Bediener oder über die Computerschnittstelle eine Winkeltoleranz von 0,5° eingestellt, so wird in Anzeige 14 prozentual dargestellt, wie gross die Wahrscheinlichkeit ist, dass die genannte Toleranz bereits überschritten wird. Hierzu wird in der Meßsonde während des Messvorganges eine automatische Fehlerabschätzung oder -berechnung durchgeführt. Diese Berechnungen werden ebenso wie die laufend fortschreitende Winkel- bzw. Orientierungs-Berechnung durch die im Gehäuse der Lagemeßsonde 4 befindliche Elektronik (insbesondere in Form eines Mikroprozessors) durchgeführt. Zu diesem Zweck ist eine geeignete Software in der Lagemeßsonde 4 vorhanden. Weiterhin weist die Lagemeßsonde eine Zero- oder Reset-Taste 16 und eine Funktionsumschaltungs-Taste 17 auf. Bei Betätigung von Taste 18 werden die aktuellen Absolut- oder Differenzwinkelangaben sowohl in einem elektronischen Speicher der Meßsonde gespeichert als auch in der Anzeige 13 sichtbar gemacht. Mittels des akustisch oder optisch wirkenden Signalgebers 19 kann dabei zusätzlich signalisiert werden, ob eine aktuell gemessene Ausrichtung genügend parallel oder rechtwinklig zu einer Referenzrichtung orientiert ist. Die Meßsonde weist bevorzugt einen Ein/Ausschalter auf (Bezugsziffer 20 in Fig. 3) und kann sich nach einer gewissen Zeit der Nichtbenutzung automatisch ausschalten. Weiterhin kann die Meßsonde 4 mit einer Präzisionslibelle 11 versehen sein, so dass die waagerechte Orientierung einer Referenz-Ebene überprüft werden kann. Steht die Meßsonde 4 also auf einer auf einer waagerechten Oberfläche, so wird bei Betätigung der Zero- oder Reset-Taste 16 somit eine entsprechende Bezugs-Orientierung in der Meßsonde festgehalten. In einer weiteren Ausführungsform der Erfindung ist zusätzlich oder anstelle der Präzisionslibeile 11 ein elektronisch wirkendes Inklinometer vorgesehen, dessen Messwerte über eine Anzeige dargestellt werden können oder per Elektronik der Meßsonde mit den Messwerten der Winkel-Orientierungen verrechnet werden können. - Die Funktionsumschaltungs-Taste 17 wird für die Umschaltung der verschiedensten Bedien- und Operations-Funktionen der Meßsonde verwendet, speziell, um die Anzeige umzuschalten, so dass nacheinander Orientierungs-Messwerte für Azimut, Elevation und Drillwinkel (Roll-Winkel) angezeigt werden können.
Die Lagemeßsonde 4 ist weiterhin mit einer Öffnung oder einem Durchbruch 15 versehen. Ein solcher Durchbruch gestattet es, die rückwärtige parallele Oberfläche der Meßsonde direkt auf eine Riemenscheibe 20, 21 (Abb. 1) oder über eine Unebenheit aufzusetzen, und zwar über eventuell vorhandene Befestigungselemente oder Wellenverlängerungen 22 hinweg. Hierdurch kann die Verwendung von sonst erforderlichen hohlzylindrischen Adapterstücken vermieden werden.

Die Computerschnittstelle 12 ermöglicht es, die jeweils im angelegten Zustand der Lagemeßsonde in der Meßsonde abgespeicherten Daten ihrer winkelmassigen räumlichen Orientierung an einen nicht dargstellten Rechner weiterzuleiten, der aus diesen Daten die Werte der Korrekturen errechnet, die evtl. nötig sind, um die aufeinander auszurichtenden Körper 1, 2 und 3 in den gewünschten Ausrichtzustand zu bringen. Die Computer-Schnittstelle ist weiterhin in der Lage, Daten von optional zugeordneten Hilfsgeräten entgegenzunehmen, wie z.B. von Code-Lesern oder übergeordneten Leit-Rechnern. Die Computer-Schnittstelle wird aus Kostengründen bevorzugt drahtgebunden oder als Glasfaserverbindung ausgeführt, und in einer höherwertigen Ausführung als Mobilfunk- oder als Mobiltelefon-Datenschnittstelle zur drahtlosen Datenübertragung.

In einer bevorzugten Ausführungsform ist der entsprechende Rechner, wie oben angegeben, bereits in der Lage-Meßsonde enthalten. Mit einem solchen Gerät sind auch weitergehende Berechnungen und Visualisierungen möglich. Hierzu dient insbesondere eine zusätzliche Anzeige, welche auch graphische Elemente wiedergeben kann, zum Beispiel symbolisierte Körper oder Wellen, insbesondere auch jeweils zugehörige Unterstützungs- oder Justierungspunkte. Die Anzeige ist bevorzugt als Pixel-Display ausgeführt und weiterhin bevorzugt quadratisch. Bei fehlerhaften oder divergenten Ausrichtungen der durch Symbole gekennzeichneten Körper ist es mit einer solchen Lagemeßsonde also möglich, die genannten Unterstützungsoder Justierungspunkte einzeln auszuweisen und für diese die sinnvollsten Korrekturwerte (soweit erforderlich), insbesondere in Quer- und Höhenrichtung anzugeben. Mit solchen Werten ist somit eine z.B. parallele Ausrichtung der entsprechenden Körper in einfacher Weise durchführbar. Um diese Aufgabe an einer Mehrzahl von Maschinen oder Systemen durchführen zu können, ist eine Eingabemöglichkeit vorgesehen, mit der die geometrischen Abmessungen und Positionen der Unterstützungs- und Justierungspunkte im Raum vordefiniert und typmässig spezifiziert und in der Meß-Sonde abgespeichert werden können. Weiterhin kann nach Eingabe entsprechender Daten (manuell oder per Datenschnittstelle 12) in die Meß-Sonde auf einer Anzeige visualisiert werden, in welchen Teilschritten eine vorgegebene Messaufgabe, welche zum Beispiel einige Dutzend Walzen oder Körper umfasst, abzuarbeiten ist. Dies ist zum Beispiel dann vorteilhaft, wenn nach einer Anzahl Messungen eine Vergleichs- und Kontroll-Messung an einer Ausgangsposition durchgeführt werden soll, und die Messung, anschliessend an einen ggf. erforderlichen Neu-Abgleich der Meßsonde, an anderer Stelle fortgesetzt werden soll. In diesem Zusammenhang ist in einer Ergänzung des Funktionsumfanges für die Mess-Sonde vorgesehen, dass diese mittels einer Bar-Code-Leseeinrichtung oder einer anderen miniaturisierten Kodierungs-Lese-Einrichtung, speziell mittels eines sog. Transponders, Daten entgegennehmen kann, durch welche eine aktuelle Position innerhalb einer Fabrikhalle oder direkt an einer Maschine bzw. einem zu vermessenden Körper identifizierbar ist. Solche Daten können auch von einem GPS (Global Positioning System) abgeleitet sein und der Meß-Sonde über den Daten-Ein/-Ausgang 12 zugeführt werden. Es versteht sich, dass für den vergrösserten Funktionsumfang der Lage-Meßsonde eine entsprechend leistungsfähigere Mikroelektronik vorgesehen ist.

Mit den gezeigten erfindungsgemäßen Lagemeßsonden lassen sich Körperachsen, Körperflächen und dgl. auch in anderer Weise als parallel zueinander, z.B. in Bezug aufeinander senkrecht, oder aber schräg zueinander verlaufend, auf einfache Weise, genau und mit einem geringen zeitlichen Aufwand ausrichten.

## Patentansprüche

1. Lagemeßsonde (4) zum Ermitteln der räumlichen Orientierung zweier Körper (2,3; 20,21) in Bezug aufeinander oder eines Körpers (2,3; 20,21) relativ zu einer Referenzrichtung mit einem Gehäuse mit mindestens einer definiert an eine Gegenfläche am jeweiligen Körper (2,3; 20,21) ansetzbaren äußeren Kontaktfläche (10, 10'), **gekennzeichnet durch** mindestens einen in dem Gehäuse angeordneten mechanischen Oszillator, insbesondere einen oder mehrere sogenannte Piezo-Kreisel oder Stimmgabel-Gyroskope, zur Bestimmung der Orientierung der Lagemeßsonde (4) relativ zur Referenzrichtung oder zu mindestens einer der Winkelkoordinaten Azimut, Elevation, Roll- oder Drillwinkel, und **durch** eine Ausnehmung (15) im Gehäuse, die es gestattet, die Meßsonde (4) direkt auf den bzw. die Körper (2,3; 20,21) aufzusetzen und zwar über Unebenheiten, Befestigungselemente oder Wellenverlängerungen (22) hinweg.

2. Lagemeßsonde nach Anspruche 1, **gekennzeichnet durch** Mittel (13, 14) zum von außerhalb des Gehäuses erkennbaren Anzeigen der Ausrichtung der Lagemeßsonde (4) bezüglich mindestens einer der Winkelkoordinaten Azimutwinkel, Elevationswinkel, Roll- oder Drillwinkel.

3. Lagemeßsonde nach einem der Ansprüche 1 bis 2, **dadurch gekennzeichnet, daß** das Gehäuse mehrere in Bezug aufeinander angeordnete Kontaktflächen (10) aufweist.

4. Lagemeßsonde nach Anspruch 3, **dadurch gekennzeichnet, daß** mindestens eine Kontaktfläche (10) zum definierten Ansetzen an einen auszurichtenden Körper (20, 21) von zylindrischem oder kegeligem Außenumriß aus zwei miteinander einen Winkel einschließenden ebenen Flächenabschnitten (10', 10') besteht.

5. Lagemeßsonde nach einem der Ansprüche 1 bis 4, **gekennzeichnet durch** eine Anzeige (13, 14) und Eingabemittel (16, 17, 18) zur Eingabe, zur Visualisierung oder zur Überprüfung vorgegebener Befestigungs- oder Justierungs-Koordinaten für auszurichtende Körper

6. Lagemeßsonde nach Anspruch 5, mit einer Mikroelektronik oder einem Microcomputer, mit welchem die Errechnung und Registrierung einer aktuellen winkelmässigen Ausrichtung des Gehäuses der Lagemeßsonde (4) oder die Errechnung und Darstellung von Korrekturwerten durchführbar ist, durch welche bedarfsweise erforderliche Justage-Werte oder Verlagerungs-Werte für auszurichtende Körper (2,3; 20,21) bezüglich einzeln ausgewiesener Befestigungs- oder Justierungs-Punkte angegeben werden.

7. Lagemeßsonde nach Anspruch 5 oder 6, mit einem Speicher, welcher gespeicherte Daten enthält, durch welche die Reihenfolge von Messpunkten oder Messungen an auszurichtenden Körpern (2,3; 20,21) spezifiziert wird.

8. Lagemeßsonde nach einem der Ansprüche 1 bis 7, **gekennzeichnet durch** eine Libelle (11), oder ein mechnisches oder elektronisch wirkendes Inklinometer, welche/s am oder im Gehäuse der Meßsonde (4) zum Feststellen deren Lage insbesondere bezüglich der Vertikalen angeordnet ist bzw. sind.

9. Lagemeßsonde nach einem der Ansprüche 1 bis 8, **gekennzeichnet durch** eine Computerschnittstelle (12) zur Daten-Eingabe für vordefinierte Parameter, insbesondere Positions- oder Arbeitsschrittinformationen, oder zur Ausgabe insbesondere von erfaßten, zwischengespeicherten oder umgerechneten Meßdaten.

10. Lagemeßsonde nach einem der Ansprüche 1 bis 9, **gekennzeichnet durch** mindestens eines der folgenden Betätigungselemente:
- Reset- oder Zero-Taste (16)
- Funktions-Umschaltungs-Taste (17)
- Mess- und Speichertaste (18)
oder mit einem akustisch oder optisch wirkenden Signalgeber (19).

11. Lagemeßsonde nach einem der Ansprüche 1 bis 10, **gekennzeichnet durch** eine Anzeigevorrichtung (13) zur Anzeige von Absolut- oder Differenzwinkeln, bezüglich räumlicher Winkelkoordinaten.

12. Lagemeßsonde nach einem der Ansprüche 1 bis 11, **gekennzeichnet durch** eine Anzeigevorrichtung (14) zur Anzeige eines Konfidenzwertes, **durch** welchen die Einhaltung oder die Ausschöpfung eines vordefinierbaren Toleranz- oder Streumaßes für anzuzeigende Meßergebnisse angezeigt oder signalisiert wird.

## Claims

1. Position measurement probe (4) for determination of the three-dimensional orientation of two bodies (2,3; 20,21) with respect to one another or of one body (2,3; 20,21) relative to a reference direction with a housing having at least one outer contact surface (10, 10') which can be fitted in a defined manner to an opposing surface on the respective body (2,3; 20,21) **characterized by** at least one mechanical oscillator which is arranged in the housing, in particular one or more so-called piezogyros or tuning fork gyroscopes, for determination of the orientation of the position measurement probe (4) relative to the reference direction or to at least one of the angle coordinates azimuth, elevation, roll or twist angle, and by a recess (15) in the housing, which allows the measurement probe (4) to be fitted directly to the body or bodies (2,3; 20,21) to be precise over unevennesses, attachment elements or shaft extensions (22).

2. Position measurement probe according to Claim 1, **characterized by** means (13, 14) for indication, which can be seen from outside the housing, of the alignment of the position measurement probe (4) with respect to at least one of the angle coordinates azimuth angle, elevation angle, roll or twist angle.

3. Position measurement probe according to one of Claims 1 or 2, **characterized in that** the housing has two or more contact surfaces (10) which are arranged with respect to one another.

4. Position measurement probe according to Claim 3, **characterized in that** at least one contact surface (10) for defined fitting to a body (20, 21) to be aligned and having a cylindrical or conical external outline comprises two plane surface sections (10', 10") which include an angle with one another.

5. Position measurement probe according to one of Claims 1 to 4, **characterized by** an indication (13, 14) and input means (16, 17, 18) for inputting, for visualization or for checking of predetermined attachment or adjustment coordinates for bodies to be aligned.

6. Position measurement probe according to Claim 5, having microelectronics or a microcomputer, by means of which a current angle alignment of the housing of the position measurement probe (4) can be calculated and recorded or correction values can be calculated and displayed, by means of which, when necessary, any required adjustment values or displacement values for bodies (2, 3; 20, 21) to be aligned are indicated with respect to individually identified attachment or adjustment points.

7. Position measurement probe according to Claim 5 or 6, having a memory which contains stored data, which specifies the sequence of measurement points or measurements on bodies (2, 3; 20, 21) to be aligned.

8. Position measurement probe according to one of Claims 1 to 7, **characterized by** a level (11) or a mechanical or electronically acting inclinometer, which is or are arranged on or in the housing of the measurement probe (4) in order to define its position, in particular with respect to the vertical.

9. Position measurement probe according to one of Claims 1 to 8, **characterized by** a computer interface (12) for data input of predefined parameters, in particular position or work step information, or for outputting, in particular, recorded, temporarily stored or converted measurement data.

10. Position measurement probe according to one of Claims 1 to 9, **characterized by** at least one of the following operating elements:
- reset or zero key (16)
- function switching key (17)
- measurement and storage key (18),
or with an acoustically or visually acting signal transmitter (19).

11. Position measurement probe according to one of Claims 1 to 10, **characterized by** a display apparatus (13) for displaying absolute or difference angles with respect to three-dimensional angle coordinates.

12. Position measurement probe according to one of Claims 1 to 11, **characterized by** a display apparatus (14) for displaying a confidence level, by means of which the compliance with or exhaustion of a tolerance or stray measure, which can be defined in advance, for measurement results to be displayed is displayed or signalled.

## Revendications

1. Capteur de mesure de position (4) pour déterminer l'orientation dans l'espace de deux corps (2, 3 ; 20, 21) l'un par rapport à l'autre ou d'un corps (2, 3 ; 20, 21) par rapport à une direction de référence comprenant un boîtier muni d'au moins une surface de contact (10, 10') extérieure définie applicable sur une contre-surface sur le corps (2, 3 ; 20, 21) correspondant, **caractérisé par** au moins un oscillateur mécanique disposé dans le boîtier, plus particulièrement un ou plusieurs gyroscopes dits piézoélectriques ou gyroscopes à diapason, pour déterminer l'orientation du capteur de mesure de position (4) par rapport à la direction de référence ou au moins à l'une des coordonnées angulaires azimut, élévation, angle de roulis ou angle de torsion, et par un creux (15) dans le boîtier qui permet de monter le capteur de mesure (4) directement sur le ou les corps (2, 3 ; 20, 21) et ce par le biais de bosses, d'éléments de fixation ou de prolongations ondulées (22).

2. Capteur de mesure de position selon la revendication 1, **caractérisé par** des moyens (13, 14) pour indiquer de manière reconnaissable depuis l'extérieur du boîtier l'alignement du capteur de mesure de position (4) par rapport à au moins l'une des coordonnées angulaires azimut, élévation, angle de roulis ou angle de torsion.

3. Capteur de mesure de position selon l'une des revendications 1 à 2, **caractérisé en ce que** le boîtier présente plusieurs surfaces de contact (10) disposées en référence l'une par rapport à l'autre.

4. Capteur de mesure de position selon la revendication 3, **caractérisé en ce qu'**au moins une surface de contact (10) se compose de deux sections de surface planes (10', 10") incluant un angle en vue d'une application définie sur un corps à aligner (20, 21) ayant un contour extérieur cylindrique ou conique.

5. Capteur de mesure de position selon l'une des revendications 1 à 4, **caractérisé par** un indicateur (13, 14) et des moyens d'entrée (16, 17, 18) pour entrer, pour visualiser ou pour contrôler des coordonnées de fixation ou d'ajustage prédéfinies pour les corps à aligner.

6. Capteur de mesure de position selon la revendication 5, muni d'un circuit microélectronique ou d'un micro-ordinateur avec lequel peut être effectué le calcul et l'enregistrement d'un alignement angulaire actuel du boîtier du capteur de mesure de position (4) ou le calcul et la représentation de valeurs de correction, par le biais duquel peuvent, en cas de besoin, être indiquées les valeurs d'ajustage ou les valeurs de déport nécessaires pour les corps à aligner (2, 3 ; 20, 21) par rapport à des points de fixation ou d'ajustage indiqués individuellement.

7. Capteur de mesure de position selon la revendication 5 ou 6, muni d'une mémoire qui contient des données mémorisées par le biais desquelles est spécifié l'ordre des points de mesure ou des mesures sur les corps à aligner (2, 3 ; 20, 21).

8. Capteur de mesure de position selon l'une des revendications 1 à 7, **caractérisé par** un niveau à bulle (11) ou alors un inclinomètre à fonctionnement mécanique ou électronique, lequel/lesquels est/sont disposées) sur ou dans le boîtier du capteur de mesure (4) pour déterminer sa position, notamment par rapport à la verticale.

9. Capteur de mesure de position selon l'une des revendications 1 à 8, **caractérisé par** une interface informatique (12) destinée à l'entrée des données pour des paramètres prédéfinis, notamment des informations de position ou d'étape de travail, ou pour la sortie de données de mesure notamment détectées, mémorisées temporairement ou converties.

10. Capteur de mesure de position selon l'une des revendications 1 à 9, **caractérisé par** au moins l'un des éléments de commande suivants :
- touche de réinitialisation ou de remise à zéro (16)
- touche de changement de fonction (17)
- touche de mesure et de mémorisation (18)
ou par un générateur de signal sonore ou visuel (19).

11. Capteur de mesure de position selon l'une des revendications 1 à 10, **caractérisé par** un dispositif d'affichage (13) destiné à afficher des angles absolus ou différentiels concernant les coordonnées angulaires dans l'espace.

12. Capteur de mesure de position selon l'une des revendications 1 à 11, **caractérisé par** un dispositif d'affichage (14) destiné à afficher un indice de confiance par lequel est indiqué ou signalé le respect ou l'usage d'une cote de tolérance ou de dispersion pouvant être prédéfinie pour les résultats de mesure à afficher.
